Europäisches Patentamt

European Patent Office

Office européen des brevets

(11) Publication number: **0 005 843**
A1

## EUROPEAN PATENT APPLICATION

(21) Application number: **79101690.0**

(22) Date of filing: **31.05.79**

(51) Int. Cl.²: **B 29 D 27/04**
**B 32 B 17/06**

(30) Priority: **06.06.78 US 913383**

(43) Date of publication of application:
**12.12.79 Bulletin 79/25**

(84) Designated Contracting States:
**DE FR GB NL**

(71) Applicant: **H.H. Robertson Company**
**Two Gateway Center**
**Pittsburgh Pennsylvania 15222(US)**

(72) Inventor: **Hadley, John F.**
**Box 364 Oak Road**
**Bradford Woods Pennsylvania 15015(US)**

(74) Representative: **Patentanwälte Dipl.-Ing. A. Grünecker,**
**Dr.-Ing. H. Kinkeldey, Dr.-Ing. W. Stockmair,**
**Dr. rer. nat. K. Schumann, Dipl.-Ing. P.H. Jakob, Dr. rer.**
**nat. G. Bezold Maximilianstrasse 43**
**D-8000 München 22(DE)**

(54) Method of manufacturing double skin, polyurethane foam core building panels.

(57) Double skin, polyurethane foam core building panels are fabricated in a process wherein polyurethane foam forming ingredients (20) are applied to a lower one of the two skins (13), (14) and allowed to rise vertically upwardly into engagement with the upper skin (14) which has a preformed pad (19) of continuous filament glass fibres secured to its inner surface, i.e. the surface toward which the expanding polyurethane foam is advancing.

FIG. 1

EP 0 005 843 A1

PATENTANWÄLTE

A. GRÜNECKER

H. KINKELDEY

W. STOCKMAIR

K. SCHUMANN

P. H. JAKOB

G. BEZOLD

8 MÜNCHEN 22
MAXIMILIANSTRASSE 43

May 31, 1979

EP 77

H.H. ROBERTSON COMPANY

- 1 -

# Method of Manufacturing Double Skin, Polyurethane Foam Core Building Panels

The invention relates to the manufacture of double skin, polyurethane foam core building panels. The principal use of such panels is in roofs and sidewalls of buildings.

Double skin, polyurethane foam core panels are described in Canada patents 918,873; 899,588 and copending application 116,744 filed June 25, 1971.

Double skin panels having polyurethane foam therebetween in which glass fibers are homogeneously dispersed have been described in U.S. patent 3,981,654.

In the manufacture of double skin, polyurethane foam core panels of the type with which the present invention is concerned, a first skin receives a supply of foam forming ingredients on its upper surface; the second skin is positioned in fixed juxtaposition to the first skin; the foam forming ingredients are allowed to rise from the first skin toward the inner surface of the second skin. When the foam forming ingredients first make contact with the inner surface of the second skin, adhesion occurs. Thereafter the continuously rising polyurethane foam expands outwardly toward the perimeter of the two fixed skins in addition to continuing to rise from the first skin upwardly toward the second skin. The outward migration of the foam forming ingredients toward the perimeter of the two skins, after initial contact with the upper skin has occurred, creates stresses in the foam core which result in a dense layer of poorly structured polyurethane foam in the region adjacent to the second skin. In some circumstances, the poor structure is not significant. However when the double skin, polyurethane foam core building panels are installed with a cold exterior surface and a warm or hot interior surface (for example during the construction of a building which is not closed in) blisters can form on the surface of the second skin.

The principal object of this invention is to provide a method for manufacturing double skin, polyurethane foam building panels which do not develop poorly structured foam in the region adjacent to the "rise-to" skin.

The object is accomplished by applying to the interior surface of the second skin (herein referred to as the "rise-to" skin) a preformed pad of continuous filament glass fiber. The polyurethane foam forming ingredients are applied to the inner surface of the first skin (herein referred to as the "rise-from" skin). The foam forming ingredients expand and move toward the "rise-to" skin but encounter the preformed pad of continuous filament glass fibers before they encounter the surface of the "rise-to" skin. The rising foam forming ingredients are thus intercepted and migrate toward the perimeter of the panel before they are significantly stressed in the upper direction against the "rise-to" skin. As a result of this process, the product double skin, polyurethane foam core building panels do not develop the poorly structured foam in the region adjacent to the "rise-to" skin.

In drawings which illustrate embodiments of the invention,

FIGURE 1   is a schematic illustration of a typical assembly
           line for manufacturing double skin, polyurethane
           foam core panels.

FIGURES 2, 3, 4 are sectional views of a building panel
           taken along the lines 2-2, 3-3 and 4-4 respectively
           of FIGURE 1.

FIGURE 5   is a perspective illustration of a pad of continuous filament glass fibers useful in the
           practice of the present invention.

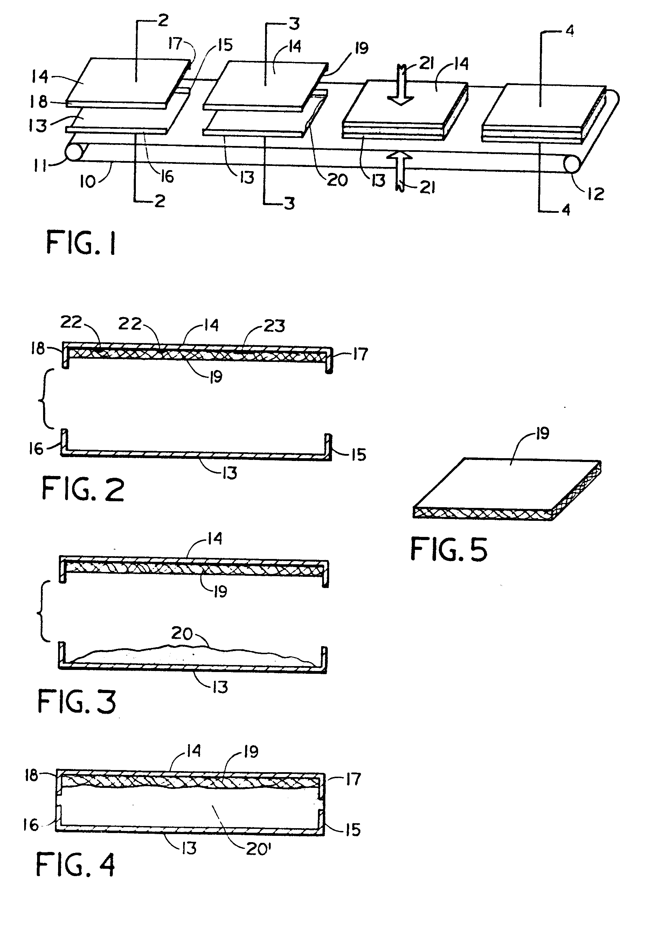

FIGURE 1 illustrates a typical installation for manufacturing
double skin, polyurethane foam core panels.  A continuous
conveyor means such as a conveyor belt 10 delivers panel
components from the entry end 11 toward the discharge end
12 at which finished panels are recovered.  A typical panel
includes a bottom skin 13 and a top skin 14.  Each of the
skins 13, 14 is equipped with some form of marginal elements
15, 16, 17, 18 which serve partially to enclose the polyurethane foam and serve as means for interconnecting assembled panels.  For the purposes of the present invention, the
lip means 15, 16, 17, 18 are illustrated as simple upstanding
flanges.  Initially, as shown in FIGURE 2, the two skins 13,
14 are assembled in a juxtaposed relationship.  It will be
observed that a pad 19 of continuous filament glass fiber
has been applied to the under surface of the upper skin 14.

As the panel components advance from left to right in FIGURE
1, a supply of polyurethane foam forming ingredients 20 is
deposited on the inner surface of the bottom skin 13 which
is referred to as a "rise-from" skin.  The foam forming
ingredients 20 are in a foaming condition and rise upwardly
away from the "rise-from" skin 13 toward the inner surface
of the skin 14 (referred to as the "rise-to" skin).  The pad 19 of continuous filament glass fiber is secured to the
"rise-to" skin 14.

Referring once again to FIGURE 1 it will be observed that
the two skins 13, 14 are brought together into their final
geometrical relationship and are retained in that final
geometrical relationship by means of applied pressure
indicated by the arrows 21 of FIGURE 1. While the pressure
is applied and maintained against the skins 13, 14, the foam
forming ingredients 20 expand to fill all of the space
between the two skins 13, 14. The foam is prevented from
squirting out between the lip means 15, 17 and lip means 16,
18 by appropriate means (not shown) which may be a closely
fitting barrier strip or molding surface.

After the foaming is essentially completed, the resulting
panel in FIGURE 4 includes the foamed polyurethane core 20'
and, in the region of the "rise-to" skin 14, includes a
homogeneous composition wherein the foam entirely fills the
interstices of the pad 19 of continuous filament glass
fibers and also adheres to the "rise-to" skin 14.

The continuous filament glass fiber material, illustrated in
FIGURE 5, is commercially available from various suppliers
for use as a filter media in air filters.

A particularly useful form of the continuous filament glass
fiber pad 19 has a density of about 168 grams per cubic
foot. The nominal fiber diameter is 38 microns. The
material is available in rolls as a continuous blanket 1/2"
thick by 24" wide. The binder which is employed by the
glass fiber pad manufacturer is a urea formaldehyde resin.
While the product is known in the trade as "continuous
filament" fiber, obviously it is not manufactured of a
single continuous filament but of many long filaments which
are randomly interwoven. The continuous filament pad is
distinguishable from the pads of glass fibers which are fabricated from chopped lengths of glass fibers by the nearly continuous length of the individual filaments.

In the practice of the present invention, the pad 19 of continuous filament glass fiber can have a thickness of 0.1 to 1.0 inch. A preferred thickness is approximately 1/4 inch.

The pad 19 of continuous filament glass fiber may be adhered to the under surface of the panel 14 by means of dots of suitable adhesive or by means of strips of adhesive tape or in any manner which will maintain the pad in proximity to the "rise-to" skin. Complete pad-to-surface adhesion is not required.

Moreover it is not necessary that the pad 19 extend over the entire exposed "rise-to" skin. However, a major portion (including the central portion) of the "rise-to" skin should be covered with the pad.

While the present invention has been illustrated in connection with a semicontinuous process for producing individual building panels, nevertheless the principle can be adapted to the production of a continuous panel wherein the two facing sheets are drawn from coiled stock and shaped into continuous double skin panels, for example, as disclosed in Canada patent 1,018,443.

While the present invention has been described in connection with an assembly process of FIGURE 1 wherein the skins are shown horizontal, there are some panel fabricating processes wherein the opposed skins are inclined at an angle during formation and foam rising. The present invention is equally adaptable to such inclined panel assembly processes.

Comparative Examples

Four commercial building panels were produced in a commercial
building panel line, each having a length of 10 feet and a
width of 30 inches.  The panels were 2 inches thick (skin-
to-skin) and had a polyurethane foam composition which
generates a 2.15 pounds per cubic foot free rise density.
Note:  Inasmuch as the polyurethane foam is allowed to rise
between facing sheets, the actual core density is greater
than the free rise density of the ingredients.

Panels 1, 2, and 3 each had a one inch thick pad of continuous filament glass fiber pad adhered to the under
surface of the "rise-to" skin by means of spots of hot melt
glue applied from a hot glue gun.

Panel 4 was fabricated in the same line, at the same time as
panels 1, 2, 3 but did not include the pad of continuous
filament glass fiber.  Each of panels was tested for shear
modulus.  The results of the shear modulus test are:

| Panel | Shear Modulus (psi) |
|-------|---------------------|
| 1     | 717                 |
| 2     | 675                 |
| 3     | 775                 |
| 4     | 435                 |

It will be observed that the three panels 1, 2, 3 fabricated
in accordance with the present invention exhibited superior
shear modulus when compared to the otherwise similar building
panel which did not include the pad of continuous filament
glass fiber.

The shear modulus is determined by conducting a chamber
method shear test (ASTM E-72) to determine actual center-
span deflection of a panel.  The deflection $\delta$ is

$$\delta = \frac{5\ (1728)\ W\ L^4}{384\ E\ I} + \frac{12\ W\ L^2}{8\ A_c\ G_c}$$

wherein W is the uniform load (pounds per square foot);

L is the span (feet);

E is Young's modulus for the skins (psi);

I is the moment of inertia of the metal skins, per foot of width (inches$^4$);

$A_c$ is the cross-sectional area of the foam core, per foot of width (inches$^2$);

$G_c$ is the shear modulus (psi).

It will be observed that an increase in the shear modulus $(G_c)$ will reduce the deflection of the resulting panel for a fixed load. Hence increased shear modulus is a desirable property in a foam core building panel.

0005843

- 1 -

CLAIMS:

1.  In the method of making a panel having two opposed
    facing sheets joined by a foamed-in-place polyurethane
    foam core, which method comprises positioning the two
    facing sheets in juxtaposition, applying foaming
    polyurethane foam forming ingredients to the bottom one
    of the said facing sheets and retaining the two said
    facing sheets in a fixed juxtaposed relationship until
    the said polyurethane foam forming ingredients rise to
    engage the top one of said facing sheets, the improvement in said method comprising:

    applying to a major portion of the undersurface of the
    said top one of the facing sheets a preformed pad of
    continuous filament glass fibers.

2.  The method of Claim 1 wherein the said preformed pad
    has a thickness of 0.25 to 1.0 inch.

3.  The method of Claim 1 wherein the said preformed pad is
    adhered to the interior surface of the said top one of
    said facing sheets by means of spot applied adhesives.

4.  The method of Claim 1 wherein the said preformed pad
    has its continuous filament glass fibers retained by
    means of a binder which is compatible with polyurethane
    foam.

0005843

FIG. 1

FIG. 2

FIG. 3

FIG. 4

FIG. 5

## European Patent Office

## EUROPEAN SEARCH REPORT

| DOCUMENTS CONSIDERED TO BE RELEVANT | | |
|---|---|---|
| **Category** | **Citation of document with indication. where appropriate. of relevant passages** | **Relevant to claim** |
| | FR - A - 2 339 488 (EXXON RESEARCH) <br><br> * page 2, line 15 - page 3, line 5; page 10, lines 4-14; page 12, lines 9-22; figure 3 * <br><br> --- | 1 |
| A | GB - A - 1 191 902 (BAYER A.G.) <br><br> * page 2, lines 37-42 and 118-123; page 3, lines 52-58; figure 2 * <br><br> ------ | |

**CLASSIFICATION OF THE APPLICATION (Int. Cl.²)**

B 29 D 27/04
B 32 B 17/06

**TECHNICAL FIELDS SEARCHED (Int.Cl.²)**

B 29 D 27/00
B 29 D 3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 7-08-1979 | SCHMIDL |

EPO Form 1503.1   06.78